# EUROPÄISCHE PATENTSCHRIFT

(11) **EP 0 866 259 B1**
(45) Veröffentlichungstag und Bekanntmachung des Hinweises auf die Patenterteilung: **03.07.2002**
(21) Anmeldenummer: 98400430.9
(22) Anmeldetag: 20.02.1998
(51) Int. Cl.: F16L 59/06, F16L 59/12, F16L 7/00

(54) **Abstandshalter für ein langgestecktes Substrat**
Spacer for an elongated substratum
Dispositif d'espacement pour objets allongés

(30) Priorität: 19.03.1997 DE 19711373
(43) Veröffentlichungstag der Anmeldung: 23.09.1998
(73) Patentinhaber: Nexans, 75008 Paris (FR)
(72) Erfinder: Schippl, Klausdieter, 30659 Hannover (DE)
(74) Vertreter: Döring, Roger, Dipl.-Ing.

(56) Entgegenhaltungen:
- DD-A- 116 915
- DE-A- 2 136 176
- US-A- 2 914 090
- US-A- 4 984 605

## Beschreibung

Die Erfindung betrifft einen Abstandshalter für ein langgestrecktes Substrat im Innern eines langgestreckten Rohres sowie ein koaxiales Rohrsystem mit einem solchen Abstandshalter.

So einen Abstandhalter und ein koaxiales Rohrsystem sind von US 2 914 090 schon bekannt.

Die Erfindung geht von folgender Überlegung aus:

Eine optimale thermische Isolierung in der Kältetechnik wird durch eine Vielschicht-Folienisolierung im Hochvakuum erreicht (Superisolierung). Dabei wird der Gesamtwärmestrom durch Minimieren der Komponenten Q_{Gas}, Q_{FK} und Q_{Rad} auf den technisch bisher geringsmöglichen Wert gebracht.

Die Verlustwärmeströme Q_{Gas} werden durch Evakuieren des Isolationsraums reduziert.

Die Feststoff-Wärmebrücken z. B. durch Abstandshalter, die verantwortlich für Q_{FK} sind, werden konstruktiv durch Minimieren der Festkörperkontaktströme reduziert.

Die Strahlungsverluste Q_{Rad} werden durch Verspiegelung der Innenwände oder durch Einbau hochreflektierender Folien reduziert,

Q_{FK} spielt gerade bei flexiblen, vakuumisolierten Kryoleitungsrohren eine entscheidende Rolle. Damit das kalte Innenrohr an keiner Stelle im Rohrverlauf direkten Kontakt zu dem auf Raumtemperatur befindlichen Außenrohr hat, wurden bisher Abstandhalter in verschiedenen Konstruktionen eingesetzt. Diese müssen eine möglichst große Kraftkomponente übertragen können, aber in gleichem Maße die Eigenschaft einer geringen Wärmeleitfähigkeit haben. Die bekannten Abstandshalter haben den Nachteil, die beiden notwendigen Zielsetzungen nicht in gleich gutem Maße umzusetzen. Falls eine geringe Wärmeleitung erreicht wurde, war die mechanische Belastbarkeit gering, bei hoher mechanischer Belastbarkeit mußte eine sehr hohe Wärmeleitung in Kauf genommen werden.

Aus der DE-C2-2 136 176 ist ein aus zwei konzentrischen Rohren bestehendes Rohrsystem z. B. ein bei tiefen Temperaturen betriebenes elektrisches Kabel oder eine Rohrleitung zum Transport flüssiger oder gasförmiger erwärmter oder gekühlter Medien bekannt, dessen inneres Rohr in dem umgebenden äußeren Rohr durch materialarme Abstandshalter in Lage gehalten ist. Die Abstandshalter sitzen in Abständen auf dem Innenrohr auf und stützen sich an der inneren Oberfläche des Außenrohres ab. Der Abstandshalter besteht aus mehreren geschlitzten Ringen, deren Schlitzbreite dem Durchmesser des Innenrohres entspricht. An jedem Ring ist im Schlitzbereich ein Fadenelement befestigt. Die Ringe sind so miteinander verbunden, daß sie um eine gemeinsame Drehachse schwenkbar sind. Beim Aufstecken des Abstandshalters auf das Innenrohr legen sich die Fadenelemente teilweise um das Innenrohr herum. Das Außenrohr stützt sich auf dem äußeren Umfang des aus den Ringen bebildeten Abstandshalters ab. Diese Konstruktion ist sehr materialarm. Da jedoch die dauerhafte Befestigung der Fadenelemente an den Ringen schwierig ist und die Anbindung sich unter einer Zugbelastung lösen kann, ist dieser Abstandshalter für biegbare Rohrsysteme weniger geeignet, denn bei solchen biegbaren Rohrsysteme können beim Biegen Zug- bzw. Druckbelastungen mehr als 10000 N auftreten.

Der Erfindung liegt von daher die Aufgabe zugrunde, einen Abstandshalter abzugeben, der materialarm ausgebildet ist und von daher gute Wärmeisoliereigenschaften aufweist sowie hohe Zugbelastungen auszuhalten vermag.

Diese Aufgabe wird durch die im Anspruch 1 angegebenen Merkmale gelöst.

Weitere vorteilhafte Ausgestaltungen des Abstandshalters sind in den Unteransprüchen erfaßt.

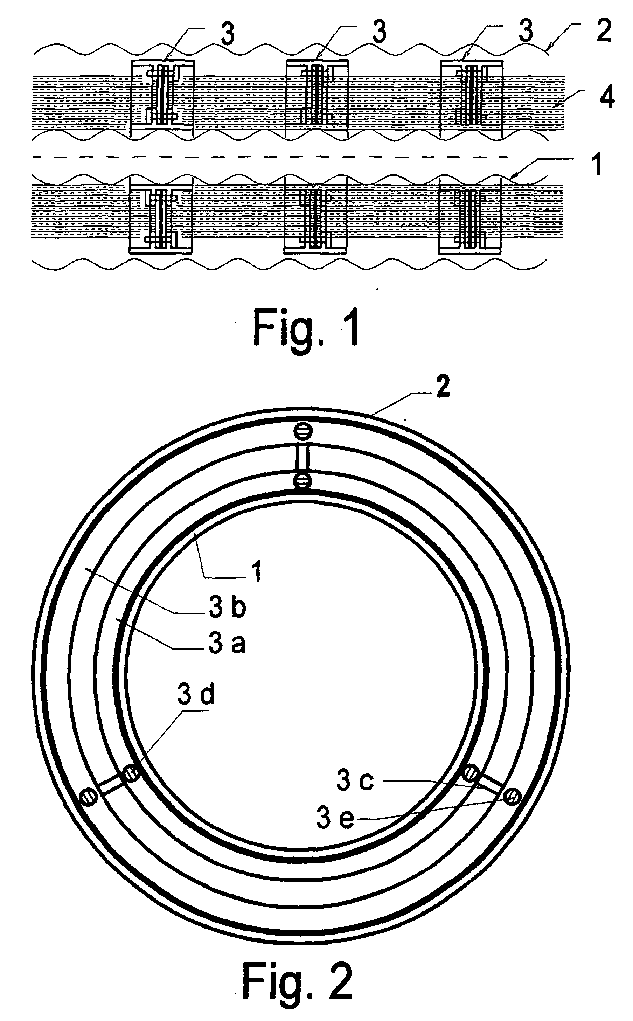

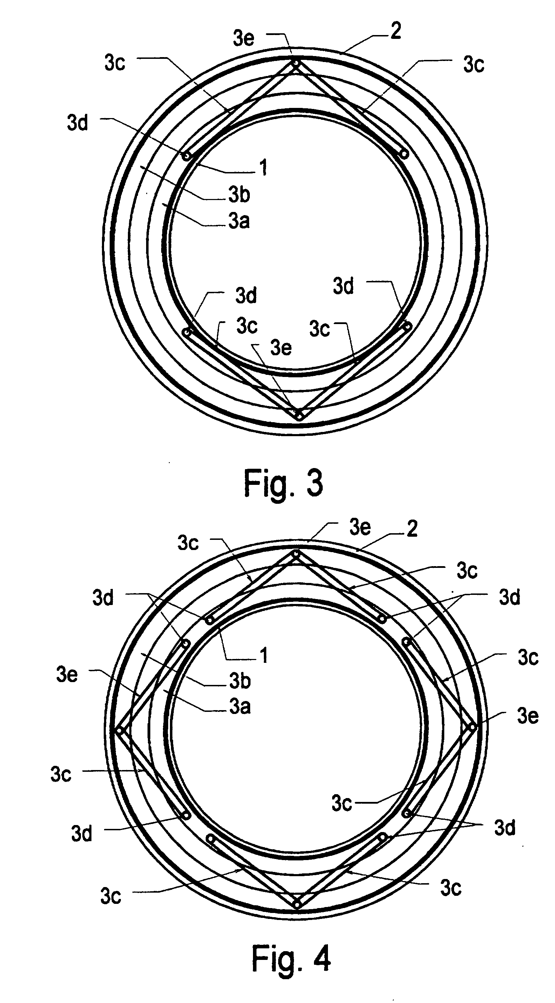

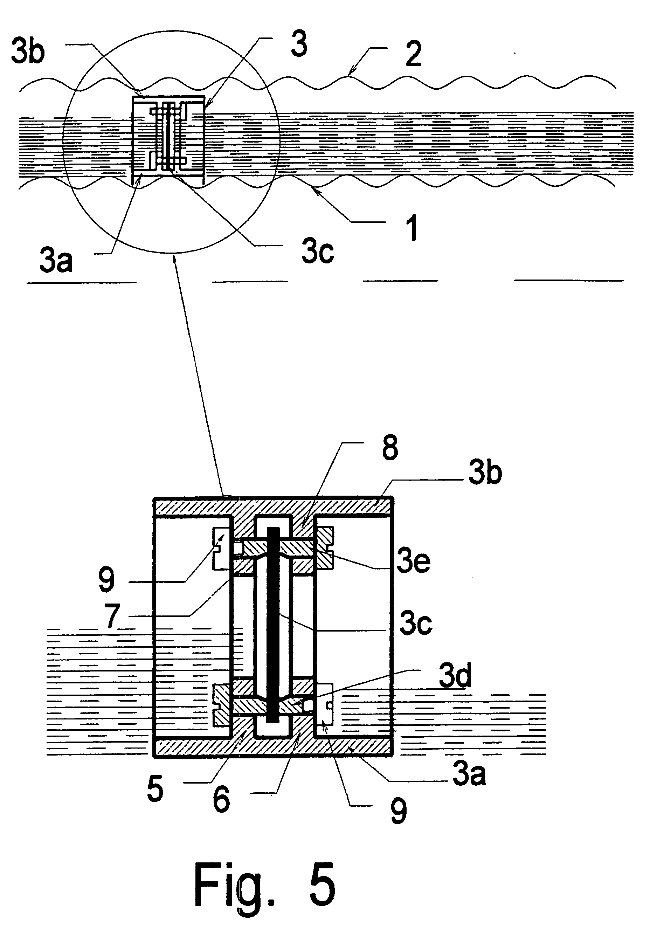

Die Erfindung ist anhand der in den Figuren 1 bis 5 schematisch dargestellten Ausführungsbeispiele näher erläutert.

In der Figur 1 ist ein Rohrleitungssystem dargestellt, welches vorzugsweise zum Transport von kryogenen Flüssigkeiten oder Gasen geeignet ist. Alternativ kann es sich auch um ein Supraleiterkabel handeln.

Das Rohrsystem besteht aus einem Innenrohr 1 aus einem gewellten Metallrohr sowie einem Außenrohr 2 ebenfalls aus einem gewellten Metallrohr. Das Innenrohr 1 ist mittels Abstandshalter 3 konzentrisch zum Außenrohr 2 gehalten. Die Abstandshalter 3 sind ringförmig und sind in längsaxialem Abstand zueinander auf dem Innenrohr 1 angeordnet. Der Bereich zwischen den Abstandshaltern 3 ist mit mehreren Lagen 4 von Kunststoffolien, die zumindest an einer Seite mit Metall bedampft sind, ausgefüllt. Der Ringspalt zwischen dem Innenrohr 1 und dem Außenrohr 2 wird evakuiert.

Die Figur 2 zeigt einen Schnitt durch das Leitungsrohr. Als Abstandshalter 3 dient ein Bauteil, welches aus einem inneren Ring 3a, der auf dem Innenrohr 1 aufsitzt und einem äußeren Ring 3b, der an der inneren Oberfläche des Außenrohres 2 anliegt, besteht. Der innere Ring 3a ist in den äußeren Ring 3b durch Halteelemente 3c eingehängt, die gleichmäßig über den Umfang verteilt angeordnet sind. Die Halteelemente 3c sind mittels Tragbolzen 3d am inneren Ring 3a und mittels Tragbolzen 3e am äußeren Ring 3b befestigt. Die Halteelemente 3c gewährleisten, eine konzentrische Anordnung der Ringe 3a und 3b und damit der Rohre 1 und 2 zueinander.

Die Halteelemente 3c bestehen aus einem Fasermaterial hoher Zugfestigkeit und geringer Wärmeleitfähigkeit z. B. aus Glasfasern, Kohlefasern oder hochfesten Kunststofffasern z. B. Polyaramidfasern. Die Fasern sind sogenannte Faserendloselemente, die zu einem Ring oder Oval gewickelt und in einer Matrix aus Kunststoffharz, z. B. Polyester oder Epoxidharz eingebettet sind.

Je nach Anzahl der Windungen und Durchmesser der Fasern werden Zugfestigkeiten von über 1000 N/mm² bei einer Wärmeverlustleistung von mit 0,1 W bei z. B. 25 mm Abstand zwischen den Befestigungspunkten (Tragbolzen 3d und 3e) erreicht. Durch den Einsatz der Faserendloselemente, die zwischen den zwei Tragbolzen 3d und 3e eingespannt sind, ist eine Krafteinlenkung in die Halteelemente 3c ohne Einschränkung möglich. Die Halteelemente 3c sind in ihrer Erstreckung in Längsrichtung des Rohrsystems äußerst gering, so daß eine nahezu vollständige Füllung des Ringspaltes mit den verspiegelten Isolierfolien möglich ist. Dadurch werden die Wärmeverluste gegenüber den bisher bekannten massereichen Abstandshaltern hoher Belastbarkeit wesentlich verringert.

Die Figur 3 zeigt eine andere Art der Aufhängung. Hier sind am äußeren Ring 3b nur zwei Tragbolzen 3e befestigt, an denen je zwei Halteelemente 3c festgelegt sind.

Die Figur 4 zeigt eine weitere Alternative der Aufhängung.

Figur 5 zeigt eine vergrößerte Darstellung des Abstandshalters 3.

Die Tragbolzen 3d sind mittels zweier voneinander beabstandeter Rippen 5 und 6 gehaltert und zwar in nicht näher bezeichneten Bohrungen in den Rippen 5 und 6.

In gleicher Weise sind die Tragbolzen 3e mittels der Rippen 7 und 8 gehaltert.

Beide Tragbolzen 3d und 3e sind an ihren Enden mit einer Verdrehsicherung 9 versehen.

Die Schäfte der Tragbolzen 3d und 3c sind dort, wo die Halteelemente 3c sich befinden, exzentrisch ausgebildet, so daß beim Drehen der Tragbolzen 3d und/oder 3e der innere Ring 3 a und damit das innere Rohr 1 in eine exakt konzentrische Lage zum äußeren Rohr 2 gebracht werden kann.

Da das beschriebene Leitungsrohr mit dem gewellten Innenrohr 1 und dem gewellten Außenrohr 2 sehr flexibel ist, können derartige Rohre in großen Längen hergestellt werden und wie elektrische Kabel auf Transporttrommeln gewickelt und verlegt werden. Aus Herstellungsgründen ist es deshalb erforderlich, daß die Abstandshalter 3 seitlich auf das Innenrohr 1 aufgesteckt werden können.

Dazu kann sowohl im inneren Ring 3a als auch im äußeren Ring 3b in nicht dargestellter Weise ein Schlitz vorgesehen werden, dessen Breite so bemessen ist, daß der Schlitz das Innenrohr 1 übergreift und der Anstandshalter 3 fest auf dem Innenrohr 1 aufsitzt.

Eine andere Möglichkeit besteht darin, daß der Abstandshalter 3 aus zwei Hälften aufgebaut ist, die z. B. durch eine scharnierartige Verbindung miteinander verbunden sind oder z. B. durch einen Schnappmechanismus zu den Abstandshalter 3 vereinigt werden können.

Der erfindungsgemäße Abstandshalter eignet sich in hervorragender Weise für sogenannte Supraleiterkabel. In diesem Fall wird im Innenrohr 1 ein Leiter aus supraleitendem Material geführt.

Ein anderer vorteilhafter Anwendungsfall ist ein konzentrisches Rohrsystem aus zwei gewellten Metallrohren für den Transport von tiefgekühlten Medien.

Ein solches Rohrsystem besteht beispielweise aus einem inneren Wellrohr mit einem inneren Durchmesser von 127 mm und einen äußeren Durchmesser von 143 mm. Das äußere Wellrohr hat einen Innendurchmesser von 200 und einen Außendurchmesser von 220 mm. Der Abstand zwischen den Abstandshaltern beträgt 1 m. Der Raum zwischen den Abstandshaltern ist mit einer sogenannten Superisolierung (mehrere Lagen einer metallbedampften Kunststoffolie) ausgefüllt und wird abschließend evakuiert. Mit einer solchen Anordnung wurde eine Wärmeverlustleistung von weniger als 0,5 W/m Rohrlänge erreicht, wenn sich in dem Innenrohr flüssiger Stickstoff befand. Auch bei einer Biegung des Rohrsystems um einen Biegeradius von 2,5 m bei abgekühltem Innenrohr war keine Verlagerung des Innenrohres in dem Außenrohr feststellbar.

## Patentansprüche

1. Abstandshalter (3) für ein langgestrecktes Substrat (1) im Innern eines langgestreckten Rohres (2) aus einem das langgestreckte Gut umgebenden inneren Ring (3a), einem von dem langgestreckten Rohr (2) umgebenen äußeren Ring (3b), wobei der Außendurchmesser des inneren Ringes (3a) kleiner ist als der Innendurchmesser des äußeren Ringes (3b) und der innere und der äußere Ring (3a,3b) durch zumindest drei gleichmäßig über den Umfang verteilt angeordnete speichenartige Elemente (3c) aus Fasermaterial miteinander verbunden sind.

2. Abstandshalter nach Anspruch 1, **dadurch gekennzeichnet, daß** die Elemente (3c) Faserendloselemente aus Kohle- oder Glasfasern sind, welche in einem Harz eingebunden sind.

3. Abstandshalter nach Anspruch 1 oder 2, **dadurch gekennzeichnet, daß** die Elemente (3c) aus zu einem Ring oder Oval gewickelten Einzelfasern bestehen.

4. Abstandshalter nach einem der Ansprüche 1 bis 3, **dadurch gekennzeichnet, daß** die Elemente (3c) aus Fasermaterial um zwei Bolzen (3e,3d) herumgeführt sind, von denen der erste (3e) am äußeren Ring (3b) und der zweite (3d) am inneren Ring (3a) befestigt sind.

5. Abstandshalter nach Anspruch 4, **dadurch gekennzeichnet, daß** der innere Ring (3a) zwei voneinander beabstandete radial nach außen weisende in Umfangsrichtung verlaufende Rippen (5,6) aufweist, daß der äußere Ring (3b) zwei von einander beabstandete radial nach innen weisende in Umfangsrichtung verlaufende Rippen (7,8) aufweist und daß die Bolzen (3d,3e) durch in den Rippen (5,6,7,8) vorgesehene Bohrungen gehalten sind.

6. Abstandshalter nach einem der Ansprüche 1 bis 5, **dadurch gekennzeichnet, daß** sowohl im inneren (3a) als auch im äußeren Ring (3b) ein Schlitz vorgesehen, dessen Breite so bemessen ist, daß der Abstandshalter seitlich auf das Substrat aufsteckbar ist.

7. Abstandshalter nach einem der Ansprüche 1 bis 5, **dadurch gekennzeichnet, daß** der Abstandshalter (3) zweigeteilt ist.

8. Koaxiales Rohrsystem zum Transport tiefgekühlter Medien unter Verwendung eines Abstandshalters nach einem der Ansprüche 1 bis 7 bestehend aus einem gewellten inneren Metallrohr und einem gewellten äußeren Metallrohr, wobei der zwischen dem inneren und dem äußeren Rohr befindliche Ringraum evakuiert ist.

## Claims

1. A spacer (3) for a stretched substrate (1) inside a stretched tube (2) consisting of an inner ring (3a) around the stretched product; an outer ring (3b) surrounded by the stretched tube (2), wherein the outer diameter of the inner ring (3a) being smaller than the inner diameter of the outer ring (3b), and wherein the inner ring (3a) and the outer ring (3b) are connected to each other with at least three spoke-like elements (3c), spread out equally over the circumference, made of a fiber material.

2. A spacer according to claim 1, **characterized in that** the elements (3c) are continuous fiber elements made of carbon or glass fiber bound in a resin.

3. A spacer according to claim 1 or 2 **characterized in that** the elements (3c) consist of individual fibers wound up to a ring or oval.

4. A spacer according to one of the claims 1 to 3, **characterized in that** the elements (3c) made of fiber material are wound around two pins (3e, 3d), wherein the first pin (3e) is connected to the outer ring (3b) and the second pin (3d) is connected to the inner ring (3a).

5. A spacer according to claim 3, **characterized in that** the inner ring (3a) has two ribs (5, 6), which are located at a certain distance from each other, are directed radially to the outside, and are running along the circumference, that the outer ring has two ribs (7, 8), which are located at a certain distance from each other, are directed radially to the inside, and are running along the circumference, and that the pins (3d, 3e) are held in place by drill holes in the ribs (5, 6, 7, 8).

6. A spacer according to one of the claims 1 to 5, **characterized in that** a slot is provided in the inner ring (3a) as well as in the outer ring (3b), with the width of the slot such that the spacer may be put on the substrate from the side.

7. A spacer according to one of the claims 1 to 5, **characterized in that** the spacer (3) is made up of two parts.

8. A coaxial tube system for the transport of super-cooled media constructed using a spacer according to one of the claims 1 to 7, consisting of an undulated inner metal tube and an undulated outer tube, with the ring area between the inner and the outer tube being evacuated.

## Revendications

1. Ecarteur (3) pour un substrat allongé (1) à l'intérieur d'un tube allongé (2) composé d'une bague intérieure (3a) entourant le produit allongé, d'une bague extérieure (3b) entourée par le tube allongé (2), le diamètre extérieur de la bague intérieure (3a) étant inférieur au diamètre intérieur de la bague extérieure (3b) et la bague intérieure et la bague extérieure (3a, 3b) étant reliées entre elles par au moins trois éléments (3c) en forme de rayons, répartis régulièrement sur la circonférence et composés de matériaux en fibres.

2. Ecarteur selon la revendication 1, **caractérisé en ce que** les éléments (3c) sont des éléments en fibres sans fin en fibres de carbone ou de verre noyés dans une résine.

3. Ecarteur selon la revendication 1 ou 2, **caractérisé en ce que** les éléments (3c) se composent de fibres individuelles enroulées en forme d'anneau ou d'ovale.

4. Ecarteur selon l'une des revendications 1 à 3, **caractérisé en ce que** les éléments (3c) en matériaux en fibres sont posés autour de deux broches (3e, 3d) dont la première (3e) est fixée sur la bague extérieure (3b) et la deuxième (3d) sur la bague intérieure (3a).

5. Ecarteur selon la revendication 4, **caractérisé en ce que** la bague intérieure (3a) présente deux nervures (5, 6) écartées l'une de l'autre, pointant vers l'extérieur dans le sens radial, disposées dans le sens de la circonférence, que la bague extérieure (3b) présente deux nervures (7, 8) écartées l'une de l'autre, pointant vers l'intérieur dans le sens radial, disposées dans le sens de la circonférence et que les broches (3d, 3e) sont maintenues dans des perçages prévus dans les nervures (5, 6, 7, 8).

6. Ecarteur selon l'une des revendications 1 à 5 **caractérisé en ce que**, aussi bien dans la bague intérieure (3a) que dans la bague extérieure (3b), une fente est prévue dont la largeur est dimensionnée de façon à ce que l'écarteur puisse être installé latéralement sur le substrat.

7. Ecarteur selon l'une des revendications 1 à 5 **caractérisé en ce que** l'écarteur (3) est en deux parties.

8. Système de tuyauterie coaxial pour le transport de fluides réfrigérés en utilisant un écarteur selon l'une des revendications 1 à 7, se composant d'un tube métallique intérieur ondulé et d'un tube métallique extérieur ondulé, l'espace annulaire se trouvant entre le tube intérieur et le tube extérieur étant mis sous vide.
